Europäisches Patentamt

**European Patent Office**

Office européen des brevets

(11) Numéro de publication: **0 245 178 B1**

## (12) FASCICULE DE BREVET EUROPEEN

(45) Date de publication de fascicule du brevet:
**11.09.91**

(51) Int. Cl.⁵: **G08B 23/00, H04M 3/36**

(21) Numéro de dépôt: **87401033.3**

(22) Date de dépôt: **06.05.87**

(54) **Procédé de surveillance pour anticiper le déclenchement d'une alarme.**

(30) Priorité: **07.05.86 FR 8606622**

(43) Date de publication de la demande:
**11.11.87 Bulletin 87/46**

(45) Mention de la délivrance du brevet:
**11.09.91 Bulletin 91/37**

(84) Etats contractants désignés:
**DE GB**

(56) Documents cités:
**FR-A- 2 535 492**

**NTZ-ARCHIV, vol. 3, no. 5, mai 1981, pages 121-127, Berlin, DE; S. HENTSCHKE: "Predictive processor overload control strategies for SPC switching systems"**

**IEEE PROCEEDINGS OF THE INTERNATIONAL JOINT CONFERENCE ON PATTERN RECOGNITION, Coronado, 8-11 novembre 1976, pages 399-402, IEEE Computer Society, Long Beach, US; J. JIMENEZ et al.: "Pattern recognition with a purpose: an application to micrometereology"**

(73) Titulaire: **Berruyer, Yves**
**94 Boulevard Gabriel Péri**
**F-92240 Malakoff(FR)**

(72) Inventeur: **Berruyer, Yves**
**94 Boulevard Gabriel Péri**
**F-92240 Malakoff(FR)**

(74) Mandataire: **Mongrédien, André et al**
**c/o BREVATOME 25, rue de Ponthieu**
**F-75008 Paris(FR)**

## Description

La présente invention a pour objet un procédé de surveillance pour anticiper le déclenchement d'une alarme. Ce procédé s'applique de manière générale à la surveillance de l'amplitude de toute grandeur physique dont on souhaite s'assurer qu'elle ne s'écarte pas d'une plage de valeurs prédéfinie, par exemple pour des motifs de sécurité. Cette grandeur physique est représentée sous la forme d'un signal, par exemple un signal électrique.

Typiquement, l'invention s'applique à des signaux représentatifs d'une activité humaine, par exemple un signal indiquant l'intensité du trafic téléphonique sur un faisceau de lignes téléphoniques, ou des signaux liés à une activité humaine, par exemple des signaux de contrôle pour la surveillance d'une centrale électrique, d'une raffinerie et plus généralement de tout processus industriel.

L'idée de surveiller une activité humaine, ou une grandeur physique telle qu'une température, une pression ou autre, n'est pas nouvelle. La surveillance consiste classiquement à comparer la valeur courante d'un signal représentatif de ladite activité ou de ladite grandeur physique à au mois un seuil et à déclencher une alarme si ledit signal franchit l'un desdits seuils.

Lorsque l'alarme est déclenchée, une action est entreprise, soit manuellement, soit automatiquement, de manière à ce que le signal soit ramené en deçà du seuil qu'il a franchi.

L'action étant déclenchée postérieurement au franchissement du seuil par le signal, ce dernier reste au-delà du seuil entre l'instant où l'alarme est déclenchée et l'instant où l'action entamée à la suite de l'alarme a produit son effet. La durée pendant laquelle le signal reste au-delà du seuil peut donc être importante. Ceci peut avoir des conséquences néfastes du point de vue de la sécurité, notamment si le signal surveillé est un signal de température ou de pression.

Le fait que le signal surveillé reste au-delà du seuil pendant une durée importante peut également conduire à un blocage du système surveillé, notamment lorsque celui-ci est un réseau, par exemple un réseau de télécommunications ou un réseau de transport d'énergie électrique.

Un tel réseau comporte des noeuds reliés les uns aux autres par des lignes qui servent de support à la transmission des conversations téléphoniques ou du courant électrique. La capacité d'écoulement, ou charge maximale, d'une ligne étant limitée, il convient, pour une bonne gestion du réseau, de surveiller la charge instantanée sur chaque ligne afin qu'elle ne dépasse pas un seuil prédéfini, fixé à une valeur inférieure à la charge maximale possible pour la ligne.

De manière connue, dans le cas d'un réseau téléphonique, la régulation de la charge sur une ligne consiste à refuser la partie de la charge qui dépasse le seuil. Dans le cas d'un réseau de transport de l'énergie électrique, la régulation peut consister à modifier l'itinéraire d'acheminement de l'énergie d'un noeud vers un autre noeud. Cependant, ceci peut conduire à saturer d'autres lignes et provoquer ainsi, de proche en proche, un blocage de tout le réseau.

Le principe général des procédés de surveillance connus consiste à comparer la valeur courante du signal à un seuil, et à déclencher une alarme si le niveau dudit signal est supérieur audit seuil.

On connaît cependant un procédé de surveillance qui consiste à estimer une valeur future du signal. Ceci permet d'anticiper sur le fonctionnement d'un appareil. Un tel procédé est décrit par exemple dans la revue NTZ-ARCHIV, vol. 3, n° 5, mai 1981, pp. 121-127, S. HENTSCHKE : "Predictive processor overload control strategies for SPC switching systems".

Selon l'invention, on estime encore le signal à surveiller à des dates futures mais en faisant appel à un modèle de profil, censé être représentatif de l'évolution du signal dans le type de période à surveiller. L'estimation est beaucoup plus simple et plus fiable. Par ailleurs, on compare les estimations à un seuil et on déclenche une alarme si les valeurs estimées dépassent le seuil.

De manière précise, l'invention a pour objet un procédé de surveillance d'un signal représentatif de l'amplitude d'une grandeur physique, dans lequel, à une date courante, on estime le signal à des dates futures en fonction des valeurs prises par ce signal à des dates passées,
ce procédé étant caractérisé par le fait que :
- on choisit un modèle de profil représentatif de l'évolution du signal dans le type de période à surveiller,
- on détermine le rapport entre le signal réel mesuré à une date passée et le signal à cette même date dudit modèle de profil choisi,
- on estime le signal à surveiller à au moins une date future à partir des valeurs attendues pour le profil choisi, en corrigeant ces valeurs attendues par ledit rapport,
- on compare les valeurs ainsi estimées à un seuil,
- on déclenche une alarme à la date courante si l'une des valeurs estimées à une date future est supérieure audit seuil.

Les caractéristiques et avantages de l'invention ressortiront mieux de la description qui va suivre, donnée à titre illustratif mais non limitatif, en référence aux dessins annexés, sur lesquels :

- la figure 1 représente un modèle de profil, ou profil attendu, de la charge d'un faisceau dans un réseau téléphonique, et
- la figure 2 est un graphe du signal analysé dans lequel le profil correspondant aux dates antérieures à la date courante résulte de valeurs mesurées et le profil correspondant aux dates postérieures à la date courante résulte de valeurs extrapolées à partir du profil attendu.

L'invention consiste de manière générale à anticiper le déclenchement d'une alarme en estimant des valeurs futures pour un signal mesuré, cette estimation étant faite en relation avec un profil attendu pour ce signal.

Il est bien clair que l'invention n'est pas limitée à un domaine d'application particulier, mais qu'elle s'applique au contraire quelle que soit la grandeur physique ou l'activité humaine représentées par le signal mesuré.

A titre d'exemple, on se place dans le cas de la surveillance du fonctionnement d'un réseau de télécommunication. Cette surveillance consiste à analyser le trafic transitant par les autocommutateurs de ce réseau et à analyser la charge des faisceaux reliant deux autocommutateurs.

Dans cette application, l'invention permet d'alerter l'exploitant du réseau de télécommunication, à l'avance, que la charge du système risque de croître au-delà de ses capacités de traitement. Ainsi, l'exploitant peut agir sur la configuration du système, telle que par exemple les itinéraires d'acheminement entre deux autocommutateurs, en vue de résoudre le problème potentiel de surcharge avant qu'il ne se pose réellement.

La charge dans le réseau est directement liée à l'activité humaine et n'est donc pas la même, par exemple, le jour et la nuit, ou les jours ouvrables et les jours fériés. A l'inverse, on constate expérimentalement que pour un jour donné de la semaine, la charge de chaque élément, autocommutateur ou faisceau, du réseau de télécommunication est sensiblement la même pour deux semaines différentes.

Ainsi, il est possible de modéliser la charge du réseau téléphonique à l'aide d'un nombre limité de modèles de profil de charge, chaque modèle permettant de représenter la charge attendue pour un jour particulier.

Quelques modèles, voire un seul modèle, peuvent suffire pour chaque jour particulier. Ainsi, des modèles de profil de charge sont disponibles pour chaque jour de la semaine (lundi, mardi, ...), pour modéliser un jour férié, la veille d'un jour férié, etc.

Un procédé pour mémoriser la charge d'un réseau de télécommunication au cours du temps avec un volume de données minimum a été proposé par le demandeur dans la demande de brevet français n° 8 605 139.

Ce procédé consiste à remplacer les valeurs mesurées de la charge d'un élément du réseau de télécommunication au cours d'une journée par une première valeur notant le numéro de référence du modèle de profil le plus proche du profil mesuré et une deuxième valeur notant un rapport d'échelle entre ledit profil mesuré et ledit modèle de profil.

La notion de modèle de profil de profil décrite dans cette demande de brevet correspond, dans le cadre de la présente invention, à la notion de profil attendu. En effet, pour une journée donnée, le modèle de profil correspondant à cette journée constitue une estimation de la charge de l'élément analysé du réseau de télécommunication. Ce modèle de profil, ou profil attendu, peut donc être utilisé pour estimer, par extrapolation, une valeur future du signal analysé.

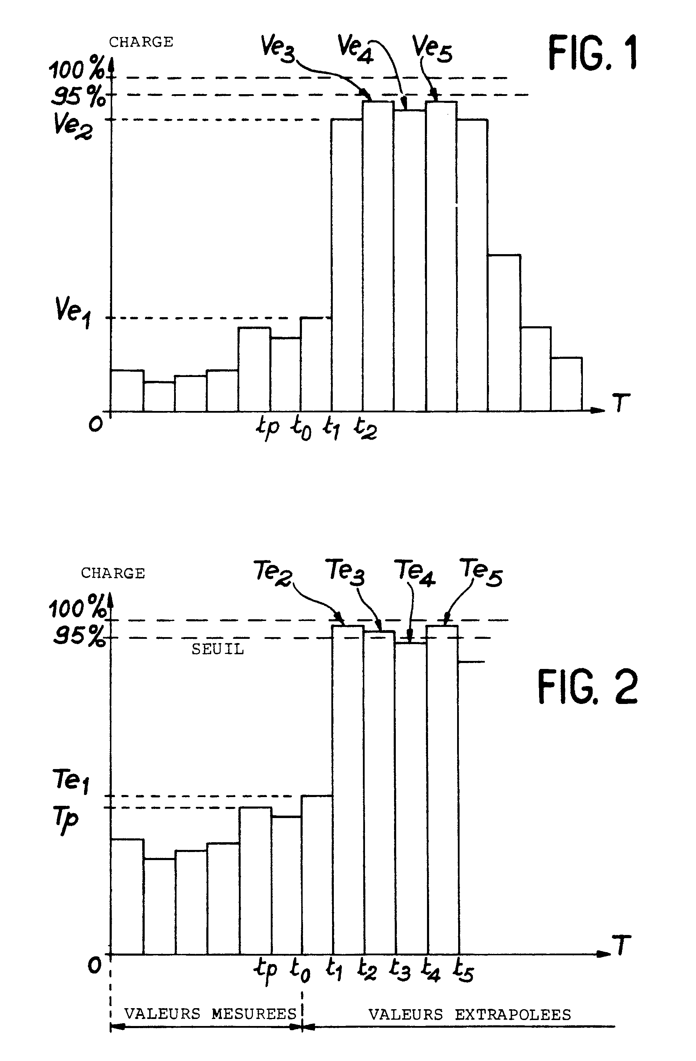

On a représenté sur la figure 1 un modèle de profil représentant la charge typique d'un faisceau reliant deux autocommutateurs du réseau de télécommunication pour un jour particulier. Ce modèle de profil est un histogramme contenant une suite de valeurs, chacune notant la charge du faisceau sur une durée de une heure.

De la même manière, on a représenté sur la figure 2 la valeur réelle de la charge du faisceau. Plus exactement, les valeurs comprises entre une date origine et la date courante $t_0$ correspondent à des valeurs de charge mesurées effectivement sur le faisceau, et les valeurs du signal correspondant à des dates postérieures à la date courante $t_0$ - (c'est-à-dire à des dates futures) sont, conformément à l'invention, des valeurs extrapolées qui sont déterminées en fonction des valeurs mesurées et du modèle de profil.

Ces valeurs extrapolées $Te_1$, $Te_2$, $Te_3$, $Te_4$ et $Te_5$ pour les dates successives $t_1$, $t_2$, $t_3$, $t_4$ et $t_5$ sont définies par exemple par la relation suivante :

$$Te_i = Ve_i . T_p / V_p$$

où i est un entier compris entre 1 et 5 sur la figure et où les valeurs $Ve_i (1 \leq i \leq 5)$ sont les valeurs du modèle de profil pour les instants $t_i (1 \leq i \leq 5)$, $T_p$ est la charge mesurée à une date $t_p$ précédant la date courante $t_0$ et $V_p$ est la valeur de la charge, à cette même date $t_p$, dans le modèle de profil.

Le rapport $T_p / V_p$ exprime la différence d'échelle entre le profil mesuré et le profil attendu. Bien que ce rapport puisse être calculé pour n'importe quelle date $t_p$ antérieure à $t_0$, il est préférable de choisir l'instant $t_p$ correspondant au maximum d'amplitude du signal mesuré (entre 0 et $t_0$) afin d'avoir une meilleure précision sur la valeur de ce rapport.

Sur la figure 2, on a indiqué le seuil de déclenchement d'une alarme. Ce seuil a été choisi, à titre d'exemple, à une valeur égale à 95% de la charge maximale (100%) supportable par le faisceau.

Il apparaît que la charge du faisceau sera probablement supérieure au seuil dans l'intervalle de temps compris entre les dates $t_1$ et $t_2$.

Le procédé de l'invention permet d'avoir connaissance de ce dépassement dès l'instant $t_0$, ce qui donne la possibilité à l'exploitant du réseau de télécommunication d'agir, par exemple sur les tables d'acheminement contenues dans chaque autocommutateur, pour modifier la configuration du réseau afin que la charge sur le faisceau analysé ne franchisse pas ce seuil.

Ainsi, à l'encontre de l'art antérieur où une action n'est entreprise qu'après que le signal ait franchi le seuil, le procédé de l'invention permet une intervention plus précoce et donc plus efficace.

## Revendications

1. Procédé de surveillance d'un signal représentatif de l'amplitude d'une grandeur physique, dans lequel, à une date courante (to), on estime le signal à des dates futures ($t_1$, $t_2$, ...) en fonction des valeurs prises par ce signal à des dates passées (tp),
ce procédé étant caractérisé par le fait que :
   - on choisit un modèle de profil représentatif de l'évolution du signal dans le type de période à surveiller,
   - on détermine le rapport (Tp/Vp) entre le signal réel (Tp) mesuré à une date passée (tp) et le signal (Vp) à cette même date dudit modèle de profil choisi,
   - on estime le signal à surveiller ($Te_1$, $Te_2$, ...) à au moins une date future ($t_1$, $t_2$, ...) à partir des valeurs attendues ($Ve_1$, $Ve_2$, ...) pour le profil choisi, en corrigeant ces valeurs attendues par ledit rapport (Tp/Vp),
   - on compare les valeurs ainsi estimées à un seuil,
   - on déclenche une a larme à la date courante (to) si l'une des valeurs estimées ($Te_1$, $Te_2$, ...) à une date future ($t_1$, $t_2$, ...) est supérieure audit seuil.

2. Procédé selon la revendication 1, caractérisé en ce que ladite date passée (tp) est la date du maximum du signal mesuré aux dates passées.

3. Procédé selon la revendication 1, caractérisé en ce que ladite grandeur physique est la charge instantanée d'un élément d'un réseau de télécommunications.

## Claims

1. Process for monitoring a signal representative of the amplitude of a physical quantity, in which at a current date ($t_o$), an estimate is made of the signal at future dates ($t_1$, $t_2$, etc.) as a function of the values assumed by said signals at past dates (tp), said process being characterized in that a profile model representative of the evolution of the signal in the type of period to be monitored is chosen, the ratio (Tp/Vp) between the real signal (Tp) measured at a past date (tp) and the signal (Vp) at said same date of the chosen profile model is determined, the signal to be monitored ($Te_1$, $Te_2$, etc.), is estimated at at least one future date ($t_1$, $t_2$, etc.) on the basis of the expectant values ($Ve_1$, $Ve_2$, etc.) for the chosen profile by correcting the said expectant values by said ratio, (Tp/Vp) the thus estimated values are compared with a threshold and an alarm is triggered at the current date (To) if one of the values estimated ($T_1$, $T_2$), for a future date ($t_1$, $t_2$, etc.) exceeds the said threshold.

2. Process according to claim 1, characterized in that the said past date (tp) is the date of the maximum of the signal measured at the past dates.

3. Process according to claim 1, characterized in that said physical quantity is the instantaneous load of an element of a telecommunications network.

## Patentansprüche

1. Verfahren zur Überwachung eines Signals, welches der Amplitude einer physikalischen Größe entspricht, wobei man zu einem momentanen Zeitpunkt ($t_0$) das Signal für zukünftige Zeitpunkte ($t_1$, $t_2$, ...) in Abhängigkeit von Werten abschätzt, die von dem Signal an vorherigen Zeitpunkten ($t_p$) angenommen wurden, wobei dieses Verfahren durch folgendes **gekennzeichnet** ist:
   man wählt ein Modell eines Profils, welches repräsentativ für den Verlauf des Signals in dem betreffenden Typ von Überwachungszeitraum ist,
   man bestimmt das Verhältnis (Tp/Vp) zwischen dem tatsächlichen Signal (Tp), welches zu einem vorherigen Zeitpunkt ($t_p$) gemessen wurde, und dem Signal (Vp) des gewählten Modells des Profils zu demselben Zeitpunkt,
   man schätzt das Überwachungssignal ($Te_1$, $Te_2$, ...) zu wenigstens einem zukünftigen Zeitpunkt ($t_1$, $t_2$, ...) nach den für das gewählte Modell erwarteten Werten ($Ve_1$, $Ve_2$, ...) ab,

wobei man diese erwarteten Werte um das obengenannte Verhältnis (Tp/Vp) korrigiert,

man vergleicht die so erhaltenen geschätzten Werte mit einem Schwellenwert,

man löst zu einem momentanen Zeitpunkt ($t_0$) einen Alarm aus, wenn einer der geschätzten Werte ($Te_1$, $Te_2$, ...) zu einem zukünftigen Zeitpunkt ($t_1$, $t_2$, ...) über dem Schwellenwert liegt.

2. Verfahren nach Anspruch 1, **dadurch gekennzeichnet, daß** der vorherige Zeitpunkt ($t_p$) der Zeitpunkt des Maximums des zu vorherigen Zeitpunkten gemessenen Signals ist.

3. Verfahren nach Anspruch 1, **dadurch gekennzeichnet, daß** die physikalische Größe die momentane Beanspruchung eines Elements eines Fernmeldenetzes ist.

FIG. 1

FIG. 2

VALEURS MESUREES    VALEURS EXTRAPOLEES